# EUROPEAN PATENT APPLICATION

(11) **EP 4 201 799 A1**
(43) Date of publication of application: **28.06.2023**
(21) Application number: 21858399.5
(22) Date of filing: 20.08.2021
(51) Int. Cl.: B63B 25/16, F17C 3/08, F17C 13/02, F17C 13/08

(54) **LIQUEFIED GAS CARRYING SHIP**

(30) Priority: 21.08.2020 JP 2020140074
(71) Applicant: KAWASAKI JUKOGYO KABUSHIKI KAISHA, Kobe-shi, Hyogo 650-8670 (JP)
(72) Inventor: URAGUCHI, Ryosuke, Kobe-shi, Hyogo 650-8670 (JP); IMAI, Tatsuya, Kobe-shi, Hyogo 650-8670 (JP); MATSUO, Masaru, Kobe-shi, Hyogo 650-8670 (JP); MOCHIDA, Kunihiko, Kobe-shi, Hyogo 650-8670 (JP)
(74) Representative: Arnold & Siedsma
(86) International application number: PCT/JP2021/030558
(87) International publication number: WO 2022/039256

(57) **Abstract**

A double-shell tank (3) mounted in a hull of a liquefied gas carrier includes: an inner shell (4) including an inner shell main structure (41) and an inner shell dome (42); an outer shell (5) including an outer shell main structure (51) and an outer shell dome (52); and a support located between the outer shell main structure (51) and the inner shell main structure (41). The outer shell dome (52) is divided by a bellows (55) into a fixed portion (52A) and a movable portion (52B). The movable portion (52B) is coupled to the inner shell dome (42). A tank cover (7) includes a tubular portion (72) that is passed through by the outer shell dome (52). An elastic body (8) is located between the tubular portion (72) and a dome flange (56). The dome flange (56) is located on the movable portion (52B) of the outer shell dome (52). Displacement measurers (9) to measure a displacement of the movable portion (52B) of the outer shell dome (52) relative to the tank cover (7) are located on a circumference surrounding the outer shell dome (52).

## Description

### Technical Field

The present disclosure relates to a liquefied gas carrier including a double-shell tank.

### Background Art

Conventionally, a liquefied gas carrier including a double-shell tank has been known. For example, Patent Literature 1 discloses a liquefied gas carrier including a double-shell tank mounted in its hull. The double-shell tank is covered by a tank cover.

In the liquefied gas carrier disclosed by Patent Literature 1, there is a vacuum layer between an inner shell and an outer shell of the double-shell tank. The vacuum layer serves as a thermal insulation layer. To be more specific, the inner shell includes an inner shell main structure and an inner shell dome. The inner shell main structure stores liquefied gas. The inner shell dome protrudes upward from the inner shell main structure. The outer shell includes an outer shell main structure and an outer shell dome. The outer shell main structure surrounds the inner shell main structure, and the outer shell dome surrounds the inner shell dome. The inner shell dome is intended for putting various pipes, such as a liquefied gas transfer pipe and an electric wire pipe, into one place. These pipes penetrate the inner shell dome.

Further, in the double-shell tank of Patent Literature 1, a bellows is incorporated in the outer shell dome. The bellows divides the outer shell dome into an upper movable portion and a lower fixed portion. When the liquefied gas is fed into the inner shell, thermal contraction of the inner shell occurs. The movable portion of the outer shell dome is coupled to the inner shell dome by a coupler, such that when the thermal contraction of the inner shell occurs, the movable portion is displaced together with the inner shell dome.

In the double-shell tank of Patent Literature 1, there is a support between the outer shell main structure and the inner shell main structure. The support supports the inner shell main structure from below.

### Citation List

### Patent Literature

PTL 1: Japanese Laid-Open Patent Application Publication No. 2015-4383
PTL 2: Japanese Laid-Open Patent Application Publication No. 2019-151191

### Summary of Invention

### Technical Problem

In the configuration of the liquefied gas carrier of Patent Literature 1, it is difficult to have a direct view of the support between the outer shell main structure and the inner shell main structure of the double-shell tank. Therefore, there is a demand for making it possible to check whether or not there is a defect in the support.

In view of the above, an object of the present disclosure is to provide a liquefied gas carrier that makes it possible to check whether or not there is a defect in a support between an outer shell main structure and an inner shell main structure of a double-shell tank.

### Solution to Problem

In order to solve the above-described problems, the inventors of the present disclosure conducted diligent studies. As a result of the studies, they have found that in the case of a configuration in which the outer shell dome penetrates the tank cover as in the ship disclosed by Patent Literature 2, since the movable portion of the outer shell dome is displaced together with the inner shell dome, whether or not there is a defect in the support between the outer shell main structure and the inner shell main structure can be checked by measuring a relative displacement of the movable portion of the outer shell dome relative to the tank cover. The reason for this is that when the thermal contraction of the inner shell occurs, if the relative displacement of the movable portion of the outer shell dome relative to the tank cover deviates from a design value, it can be considered that there is a defect in the support. The present disclosure has been made from such a technological point of view.

Specifically, a liquefied gas carrier according to the present disclosure includes: a hull; a double-shell tank mounted in the hull; and a tank cover that covers the double-shell tank. The double-shell tank includes: an inner shell including an inner shell main structure and an inner shell dome, the inner shell main structure storing liquefied gas, the inner shell dome protruding upward from the inner shell main structure; an outer shell including an outer shell main structure and an outer shell dome, the outer shell main structure surrounding the inner shell main structure, the outer shell dome surrounding, at least, a lower part of the inner shell dome, the outer shell forming a thermal insulation layer between the inner shell and the outer shell; a support located between the outer shell main structure and the inner shell main structure, the support supporting the inner shell main structure from below; a bellows incorporated in the outer shell dome such that the bellows divides the outer shell dome into a lower fixed portion and an upper movable portion; and a coupler that couples the inner shell dome and the movable portion of the outer shell dome to each other. The tank cover includes a tubular portion that is passed through by the outer shell dome. The liquefied gas carrier further includes: a dome flange located on the movable portion of the outer shell dome, the dome flange protruding from the movable portion in a manner to overhang the tubular portion; an annular elastic body located between the tubular portion of the tank cover and the dome flange; and displacement measurers to measure a displacement of the movable portion of the outer shell dome relative to the tank cover, the displacement measurers being located on a circumference surrounding the outer shell dome.

According to the above configuration, for example, when thermal contraction of the inner shell occurs, the elastic body located between the tubular portion of the tank cover and the dome flange is squeezed, and the inner shell dome and the movable portion of the outer shell dome are displaced downward. Then, the displacement of the movable portion of the outer shell dome is measured by the displacement measurers as a relative displacement relative to the tank cover. Moreover, the displacement measurers are located on the circumference surrounding the outer shell dome. Accordingly, for example, when the thermal contraction of the inner shell occurs, whether the relative displacement of the movable portion of the outer shell dome relative to the tank cover is a design value or not can be checked, which makes it possible to check whether or not there is a defect in the support between the outer shell main structure and the inner shell main structure.

### Advantageous Effects of Invention

The present disclosure provides a liquefied gas carrier that makes it possible to check whether or not there is a defect in a support between an outer shell main structure and an inner shell main structure of a double-shell tank.

### Brief Description of Drawings

FIG. 1 is a side view of a liquefied gas carrier according to one embodiment of the present disclosure.
FIG. 2 is a sectional view of a part of the liquefied gas carrier shown in FIG. 1.
FIG. 3 is a sectional view taken along line III-III of FIG. 2.
FIG. 4 is a sectional view taken along line IV-IV of FIG. 3.
FIG. 5 is an external view of a tubular portion and an outer shell dome of a tank dome.
FIG. 6 is a sectional view of an inner shell dome and the outer shell dome according to a variation.

### Description of Embodiments

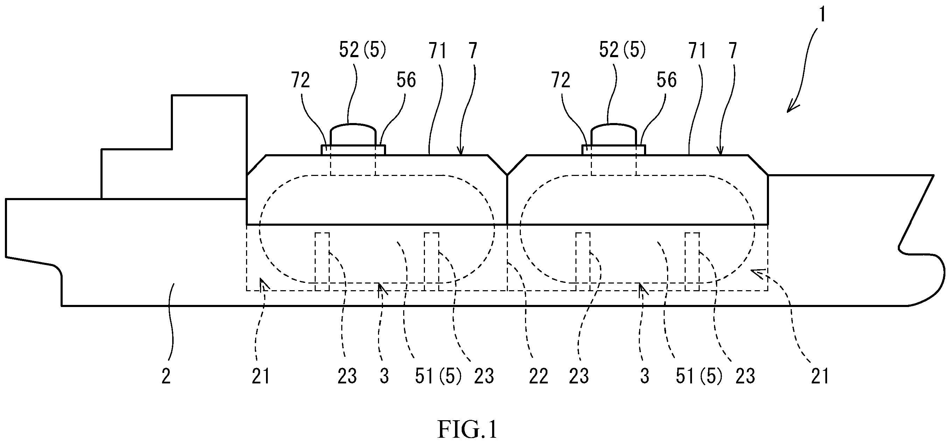

FIG. 1 shows a liquefied gas carrier 1 according to one embodiment of the present disclosure. The liquefied gas carrier 1 includes a hull 2 and two double-shell tanks 3 mounted in the hull 2. In the present embodiment, the double-shell tanks 3 are located side by side in the ship length direction. Alternatively, in a case where the ship has a wide width, the tanks 3 may be located side by side in the ship width direction. The number of double-shell tanks 3 mounted in the hull 2 may be one, or three or more.

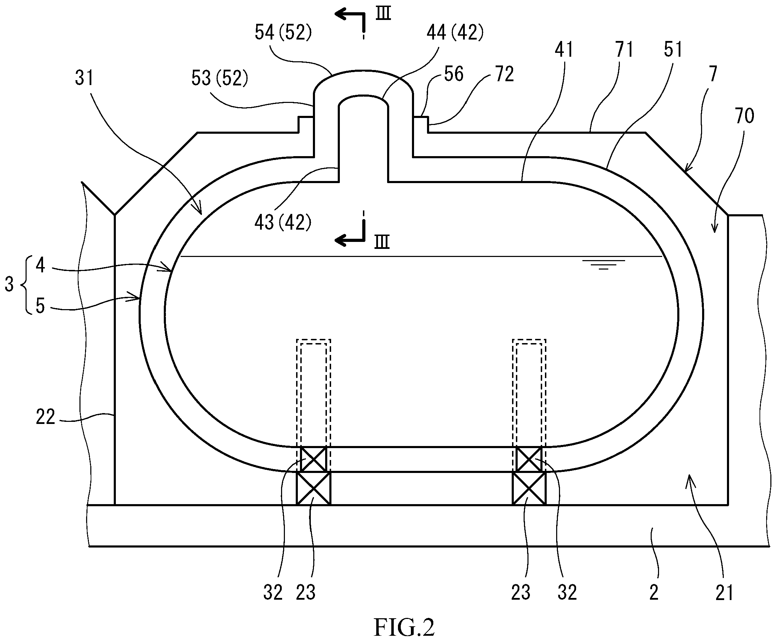

The two double-shell tanks 3 are the same in structure. As shown in FIG. 2, each double-shell tank 3 includes an inner shell 4 and an outer shell 5. The outer shell 5 encloses the inner shell 4. There is a thermal insulation layer 31 between the inner shell 4 and the outer shell 5.

In the present embodiment, the thermal insulation layer 31 is a vacuum layer. For example, in the vacuum space between the inner shell 4 and the outer shell 5, the outer surface of the inner shell 4 may be covered with a vacuum insulator (e.g., a multilayer sheet in which radiation shield films and spacers are layered alternately), and between the vacuum insulator and the inner surface of the outer shell 5, there may be a gap in which no physical object is present. Alternatively, the vacuum space may be filled with pearlite, which is a granular thermal insulator.

Further, in the present embodiment, each double-shell tank 3 is a horizontally long cylindrical tank. Alternatively, each double-shell tank 3 may have a spherical, cubic, or rectangular parallelepiped shape.

Specifically, the inner shell 4 includes an inner shell main structure 41 and an inner shell dome 42. The inner shell main structure 41 stores liquefied gas. The inner shell dome 42 protrudes upward from the inner shell main structure 41. The outer shell 5 includes an outer shell main structure 51 and an outer shell dome 52. The outer shell main structure 51 surrounds the inner shell main structure 41. The outer shell dome 52 surrounds, at least, the lower part of the inner shell dome 42. In the present embodiment, the outer shell dome 52 surrounds the entire inner shell dome 42.

For example, the liquefied gas is liquefied petroleum gas (LPG, about -45°C), liquefied ethylene gas (LEG, about -100°C), liquefied natural gas (LNG, about -160°C), liquefied oxygen (LOz, about -180°C), liquefied hydrogen (LH₂, about -250°C), or liquefied helium (LHe, about -270°C).

The inner shell main structure 41 includes a body and hemispherical sealing portions. The body extends in the horizontal direction with a constant cross-sectional shape, and the hemispherical sealing portions seal openings on both sides of the body. Alternatively, each sealing portion may have a flat shape perpendicular to the body, or may be dish-shaped. The inner shell dome 42 protrudes upward from the body of the inner shell main structure 41. In the present embodiment, the protruding direction of the inner shell dome 42 is parallel to the vertical direction. However, the protruding direction of the inner shell dome 42 may be slightly tilted relative to the vertical direction.

The outer shell main structure 51 has such a shape that the inner shell main structure 41 has been enlarged. Specifically, the outer shell main structure 51 includes a body and hemispherical sealing portions. The body extends in the horizontal direction with a constant cross-sectional shape, and has a greater diameter than that of the body of the inner shell main structure 41. The hemispherical sealing portions seal openings on both sides of the body. The outer shell dome 52 also has such a shape that the inner shell dome 42 has been enlarged. However, it is not essential for the outer shell main structure 51 to have such a shape that the inner shell main structure 41 has been enlarged. Similarly, it is not essential for the outer shell dome 52 to have such a shape that the inner shell dome 42 has been enlarged.

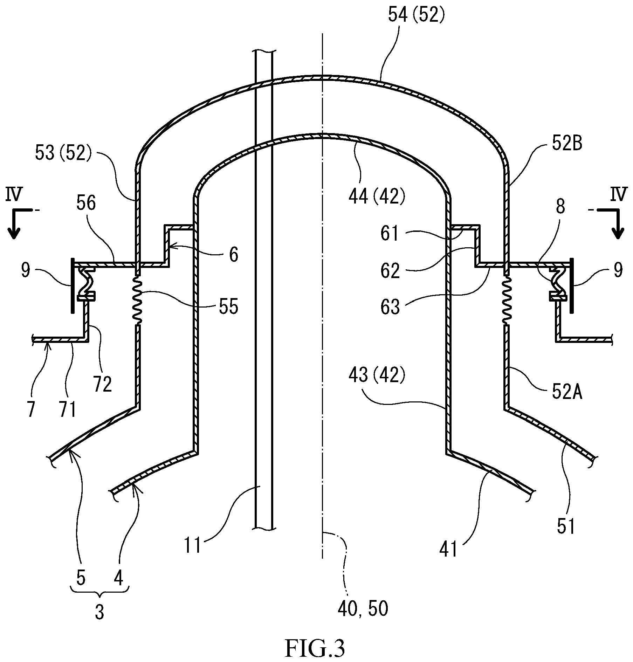

The inner shell dome 42 is intended for putting various pipes 11, such as a low-temperature fluid transfer pipe and an electric wire pipe, into one place (see FIG. 3; FIG. 3 shows only one pipe as a representative example). These pipes 11 penetrate the inner shell dome 42. In the present embodiment, since the outer shell dome 52 surrounds the entire inner shell dome 42, the outer shell dome 52 is also penetrated by the pipes 11.

The hull 2 includes two cargo holds 21, which are open upward. The cargo holds 21 are located side by side in the ship length direction, and are partitioned off from each other by a bulkhead 22. The double-shell tanks 3 are located inside the respective cargo holds 21.

A pair of saddles 23 is located inside each cargo hold 21. The saddles 23 are spaced apart from each other in the ship length direction. The saddles 23 support the outer shell main structure 51 of the outer shell 5 of the double-shell tank 3. A pair of supports 32, which supports the inner shell main structure 41 from below, is located between the inner shell 4 and the outer shell 5 of the double-shell tank 3. In the present embodiment, the supports 32 are located at the same positions as those of the saddles 23. Alternatively, the supports 32 may be located at different positions from those of the saddles 23.

The number and shapes of the supports 32 may be changed as necessary in accordance with the shape of the double-shell tank 3. For example, in a case where the double-shell tank 3 has a spherical shape, only one support that is cross-shaped when seen in a plan view (i.e., only one support that has a shape in which two arcs cross each other) may be located between the outer shell main structure 51 and the inner shell main structure 41.

Tank covers 7 are located over the respective double-shell tanks 3. Each tank cover 7 covers the corresponding double-shell tank 3 from above, and forms a holding space 70 together with the corresponding cargo hold 21. The holding space 70 encloses the double-shell tank 3. The outer shell main structure 51 of the outer shell 5 is positioned below the tank cover 7, and the outer shell dome 52 penetrates the tank cover 7.

The holding space 70 is filled with inert gas. For example, nitrogen or argon can be used as the inert gas that fills the holding space 70. The inert gas serves to prevent the holding space 70 from becoming negative pressure and to prevent dew condensation on the surface of the double-shell tank 3. Specifically, in a case where the low-temperature fluid stored in the inner shell main structure 41 is liquefied hydrogen, the inert gas that fills the holding space 70 also serves to prevent the generation of liquefied oxygen around the double-shell tank 3.

Alternatively, the holding space 70 may be filled not with inert gas, but with different gas (e.g., dry air). Further alternatively, the holding space 70 may be filled with no filling gas. In this case, the gas in the holding space 70 may be normal air.

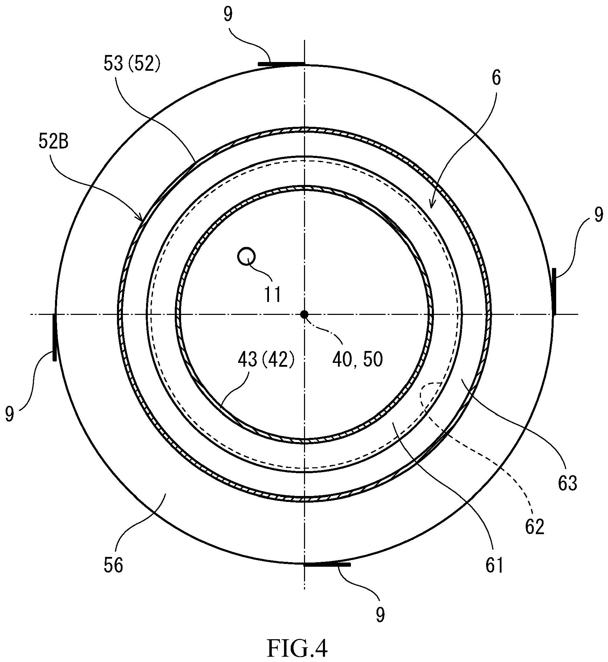

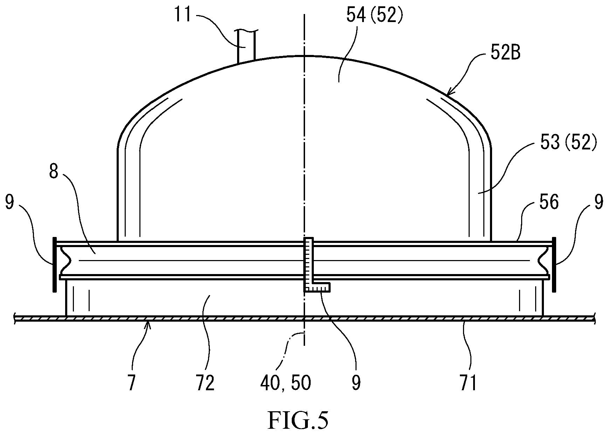

Next, with reference to FIGS. 3 to 5, the inner shell dome 42, the outer shell dome 52, and the surrounding structure are described in detail. A center line 50 of the outer shell dome 52 coincides with a center line 40 of the inner shell dome 42.

The inner shell dome 42 includes a tubular peripheral wall 43 and a ceiling wall 44. The tubular peripheral wall 43 rises from the inner shell main structure 41, and the ceiling wall 44 seals an upper opening of the peripheral wall 43. Similarly, the outer shell dome 52 includes a tubular peripheral wall 53 and a ceiling wall 54. The tubular peripheral wall 53 rises from the outer shell main structure 51, and the ceiling wall 54 seals an upper opening of the peripheral wall 53.

In the illustrated example, the aforementioned pipes 11 penetrate the ceiling wall 44 of the inner shell dome 42 and the ceiling wall 54 of the outer shell dome 52. Alternatively, the pipes 11 may bend in the inner shell dome 42 by 90 degrees and penetrate the peripheral wall 43 of the inner shell dome 42 and the peripheral wall 53 of the outer shell dome 52.

A bellows 55, which extends vertically in a wavy manner, is incorporated in the peripheral wall 53 of the outer shell dome 52. The bellows 55 divides the outer shell dome 52 into a lower fixed portion 52A and an upper movable portion 52B. The movable portion 52B is a portion penetrated by the pipes 11.

The inner shell dome 42 and the movable portion 52B of the outer shell dome 52 are coupled to each other by an annular coupler 6. In the present embodiment, the coupler 6 includes: an inner ring 61, which protrudes radially outward from the peripheral wall 43 of the inner shell dome 42; an outer ring 63, which is positioned below the inner ring 61 and which protrudes radially inward from the peripheral wall 53 of the outer shell dome 52; and a tubular partition wall 62, which connects between the outer peripheral edge of the inner ring 61 and the inner peripheral edge of the outer ring 63.

The configuration of the coupler 6 may be changed as necessary. For example, the coupler 6 may be a tubular member located between the ceiling wall 44 of the inner shell dome 42 and the ceiling wall 54 of the outer shell dome 52.

The tank cover 7 includes a ceiling portion 71 and a tubular portion 72. The ceiling portion 71 faces the bottom of the cargo hold 21, with the double-shell tank 3 located between the ceiling portion 71 and the bottom of the cargo hold 21. The tubular portion 72 protrudes upward from the ceiling portion 71, and within the tubular portion 72, the outer shell dome 52 is located to pass through the tubular portion 72.

A dome flange 56, which protrudes radially outward from the peripheral wall 53, is located on the movable portion 52B of the outer shell dome 52. The dome flange 56 protrudes from the movable portion 52B in a manner to overhang the tubular portion 72 of the tank cover 7.

An annular elastic body 8 is located between the tubular portion 72 of the tank cover 7 and the dome flange 56. The elastic body 8 seals between the tubular portion 72 of the tank cover 7 and the dome flange 56, and is elastically deformable to a great degree in the vertical direction. For example, expansion rubber can be used as the elastic body 8.

Displacement measurers 9 are located on a circumference surrounding the outer shell dome 52 (i.e., a circumference about the center line 50 of the outer shell dome 52). The displacement measurers 9 are mechanisms to measure a displacement of the movable portion 52B of the outer shell dome 52 relative to the tank cover 7.

In the present embodiment, four displacement measurers 9 are located at 90-degree intervals. Alternatively, the number of displacement measurers 9 may be two or three, or five or more.

Further, in the present embodiment, the displacement measurers 9 are located around the tubular portion 72 of the tank cover 7. The displacement measurers 9 are located on the dome flange 56, such that the displacement measurers 9 are displaced together with the movable portion 52B of the outer shell dome 52. Alternatively, the displacement measurers 9 may be located on the tubular portion 72 of the tank cover 7 such that the displacement measurers 9 are not displaced even when the movable portion 52B of the outer shell dome 52 is displaced.

In the present embodiment, each displacement measurer 9 is a ruler on which graduations are marked not only in the vertical direction, but also in the horizontal direction. Alternatively, the graduations may be marked on the ruler only in the vertical direction. Each displacement measure 9 is not limited to such a ruler, but may be realized in a different form selected from various options. For example, each displacement measurer 9 may be, for example, a contact-type displacement sensor, a non-contact-type displacement sensor, or rubber on which a lattice-like mesh is drawn.

To be more specific, two of the four displacement measurers 9 are located in contact with a plane that passes through the center line 50 of the outer shell dome 52 and that is parallel to the ship length direction, and the other two displacement measurers 9 are located in contact with a plane that passes through the center line 50 of the outer shell dome 52 and that is parallel to the ship width direction.

Although not illustrated, there are reference marks on the outer peripheral surface of the tubular portion 72 of the tank cover 7. The reference marks are, for example, engraved on the outer peripheral surface of the tubular portion 72. The reference marks are located on the plane that passes through the center line 50 of the outer shell dome 52 and that is parallel to the ship length direction and on the plane that passes through the center line 50 of the outer shell dome 52 and that is parallel to the ship width direction. The positions of the respective reference marks are measured by using the above rulers.

In the liquefied gas carrier 1 configured as described above, for example, when thermal contraction of the inner shell 4 occurs, the elastic body 8 located between the tubular portion 72 of the tank cover 7 and the dome flange 56 is squeezed, and the inner shell dome 42 and the movable portion 52B of the outer shell dome 52 are displaced downward. Then, the displacement of the movable portion 52B of the outer shell dome 52 is measured by the displacement measurers 9 as a relative displacement relative to the tank cover 7. Moreover, the displacement measurers 9 are located on the circumference surrounding the outer shell dome 52. Accordingly, for example, when the thermal contraction of the inner shell 4 occurs, whether the relative displacement of the movable portion 52B of the outer shell dome 52 relative to the tank cover 7 is a design value or not can be checked, which makes it possible to check whether or not there is a defect in the supports 32 between the outer shell main structure 51 and the inner shell main structure 41.

Furthermore, in the present embodiment, since the four displacement measurers 9 are located at 90-degree intervals, a tilt of the movable portion 52B of the outer shell dome 52 relative to the tank cover 7 can also be checked.

Also, in the present embodiment, the rulers, on each of which the graduations are marked in both vertical and horizontal directions, are used as the displacement measurers 9. This makes it possible to instantaneously know a displacement in the vertical direction and a displacement in the horizontal direction at each measurement point.

### (Variations)

The present disclosure is not limited to the above-described embodiment. Various modifications can be made without departing from the scope of the present disclosure.

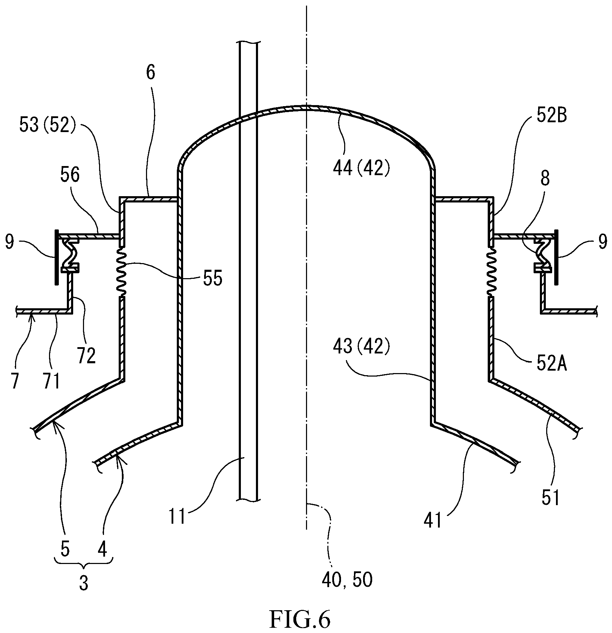

For example, as shown in FIG. 6, the outer shell dome 52 may surround only the lower part of the inner shell dome 42. In this case, only the peripheral wall 53 incorporating the bellows 55 therein may serve as the outer shell dome 52, and the coupler 6 may be a ring plate that couples the upper end of the peripheral wall 53 and the peripheral wall 43 of the inner shell dome 42 to each other. In the case where the outer shell dome 52 surrounds only the lower part of the inner shell dome 42 as shown in FIG. 6, although not illustrated, there is a thermal insulation structure (e.g., partition plates arranged vertically) in the inner shell dome 42.

The thermal insulation layer 31 need not be a vacuum layer. Alternatively, the space between the inner shell 4 and the outer shell 5 may be filled with gas having low thermal conductivity, such as argon. However, if the thermal insulation layer 31 is a vacuum layer, the thermal insulation performance of the thermal insulation layer 31 can be improved.

The displacement measurers 9 may be located inside the tubular portion 72 of the tank cover 7 and around the peripheral wall 53, or around the bellows 55, of the outer shell dome 52. In this case, however, a worker needs to enter the holding space 70 to visually check the displacement measurers 9. In order to do so, it is necessary to replace the inert gas in the holding space 70 with air. In this respect, in a case where the displacement measurers 9 are located around the tubular portion 72 of the tank cover 7 as in the above-described embodiment, the worker can visually check the displacement measurers 9 from the outside of the holding space 70. Therefore, in this case, it is not necessary to replace the inert gas in the holding space 70 with air.

### (Summary)

A liquefied gas carrier according to the present disclosure includes: a hull; a double-shell tank mounted in the hull; and a tank cover that covers the double-shell tank. The double-shell tank includes: an inner shell including an inner shell main structure and an inner shell dome, the inner shell main structure storing liquefied gas, the inner shell dome protruding upward from the inner shell main structure; an outer shell including an outer shell main structure and an outer shell dome, the outer shell main structure surrounding the inner shell main structure, the outer shell dome surrounding, at least, a lower part of the inner shell dome, the outer shell forming a thermal insulation layer between the inner shell and the outer shell; a support located between the outer shell main structure and the inner shell main structure, the support supporting the inner shell main structure from below; a bellows incorporated in the outer shell dome such that the bellows divides the outer shell dome into a lower fixed portion and an upper movable portion; and a coupler that couples the inner shell dome and the movable portion of the outer shell dome to each other. The tank cover includes a tubular portion that is passed through by the outer shell dome. The liquefied gas carrier further includes: a dome flange located on the movable portion of the outer shell dome, the dome flange protruding from the movable portion in a manner to overhang the tubular portion; an annular elastic body located between the tubular portion of the tank cover and the dome flange; and displacement measurers to measure a displacement of the movable portion of the outer shell dome relative to the tank cover, the displacement measurers being located on a circumference surrounding the outer shell dome.

According to the above configuration, for example, when thermal contraction of the inner shell occurs, the elastic body located between the tubular portion of the tank cover and the dome flange is squeezed, and the inner shell dome and the movable portion of the outer shell dome are displaced downward. Then, the displacement of the movable portion of the outer shell dome is measured by the displacement measurers as a relative displacement relative to the tank cover. Moreover, the displacement measurers are located on the circumference surrounding the outer shell dome. Accordingly, for example, when the thermal contraction of the inner shell occurs, whether the relative displacement of the movable portion of the outer shell dome relative to the tank cover is a design value or not can be checked, which makes it possible to check whether or not there is a defect in the support between the outer shell main structure and the inner shell main structure.

The displacement measurers may include four displacement measurers that are located at 90-degree intervals. According to this configuration, a tilt of the movable portion of the outer shell dome relative to the tank cover can also be checked.

Each of the displacement measurers may be a ruler on which graduations are marked in a vertical direction. This configuration makes it possible to instantaneously know a displacement in the vertical direction at a measurement point.

On the ruler, the graduations may be marked not only in the vertical direction, but also in a horizontal direction. This configuration makes it possible to instantaneously know a displacement in the horizontal direction at a measurement point.

For example, the displacement measurers may be located on the dome flange.

The hull may include a cargo hold, and the double-shell tank may be located in the cargo hold. The tank cover may form a holding space together with the cargo hold, the holding space enclosing the double-shell tank. The holding space may be filled with inert gas. The displacement measurers may be located around the tubular portion of the tank cover. According to this configuration, since the displacement measurers can be visually checked from the outside of the holding space, it is not necessary to replace the inert gas in the holding space with air.

The thermal insulation layer may be a vacuum layer. According to this configuration, the thermal insulation performance of the thermal insulation layer can be improved.

## Claims

1. A liquefied gas carrier comprising:
a hull;
a double-shell tank mounted in the hull; and
a tank cover that covers the double-shell tank, wherein
the double-shell tank includes:
an inner shell including an inner shell main structure and an inner shell dome, the inner shell main structure storing liquefied gas, the inner shell dome protruding upward from the inner shell main structure;
an outer shell including an outer shell main structure and an outer shell dome, the outer shell main structure surrounding the inner shell main structure, the outer shell dome surrounding, at least, a lower part of the inner shell dome, the outer shell forming a thermal insulation layer between the inner shell and the outer shell;
a support located between the outer shell main structure and the inner shell main structure, the support supporting the inner shell main structure from below;
a bellows incorporated in the outer shell dome such that the bellows divides the outer shell dome into a lower fixed portion and an upper movable portion; and
a coupler that couples the inner shell dome and the movable portion of the outer shell dome to each other,
the tank cover includes a tubular portion that is passed through by the outer shell dome, and
the liquefied gas carrier further comprises:
a dome flange located on the movable portion of the outer shell dome, the dome flange protruding from the movable portion in a manner to overhang the tubular portion;
an annular elastic body located between the tubular portion of the tank cover and the dome flange; and
displacement measurers to measure a displacement of the movable portion of the outer shell dome relative to the tank cover, the displacement measurers being located on a circumference surrounding the outer shell dome.

2. The liquefied gas carrier according to claim 1, wherein
the displacement measurers include four displacement measurers that are located at 90-degree intervals.

3. The liquefied gas carrier according to claim 1 or 2, wherein
each of the displacement measurers is a ruler on which graduations are marked in a vertical direction.

4. The liquefied gas carrier according to claim 3, wherein
on the ruler, the graduations are marked not only in the vertical direction, but also in a horizontal direction.

5. The liquefied gas carrier according to any one of claims 1 to 4, wherein
the displacement measurers are located on the dome flange.

6. The liquefied gas carrier according to any one of claims 1 to 5, wherein
the hull includes a cargo hold, and the double-shell tank is located in the cargo hold,
the tank cover forms a holding space together with the cargo hold, the holding space enclosing the double-shell tank,
the holding space is filled with inert gas, and
the displacement measurers are located around the tubular portion of the tank cover.

7. The liquefied gas carrier according to any one of claims 1 to 6, wherein the thermal insulation layer is a vacuum layer.
